# EUROPEAN PATENT APPLICATION

(11) **EP 4 216 374 A1**
(43) Date of publication of application: **26.07.2023**
(21) Application number: 21884634.3
(22) Date of filing: 27.08.2021
(51) Int. Cl.: H01R 13/502, H02J 7/00

(54) **POWER ADAPTER**

(30) Priority: 30.10.2020 CN 202011191886; 30.10.2020 CN 202022467715 U
(71) Applicant: GUANGDONG OPPO MOBILE TELECOMMUNICATIONS CORP., LTD., Dongguan, Guangdong 523860 (CN)
(72) Inventor: ZHOU, Youwen, Dongguan, Guangdong 523860 (CN)
(74) Representative: Novagraaf Technologies
(86) International application number: PCT/CN2021/114869
(87) International publication number: WO 2022/088902

(57) **Abstract**

A power adapter, comprising a main body (11), a synchronization mechanism (12), a first cover body (13), and a second cover body (14). The main body (11) comprises a housing (111) and pins (113) connected to the housing (111); the synchronization mechanism (12) is connected to the housing (111); the first cover body (13) is connected to the synchronization mechanism (12) and can move relative to the housing (111) to a first position and a second position; and the second cover body (14) is connected to the synchronization mechanism (12) and is driven by the synchronization mechanism (12) during the movement of the first cover body (13) relative to the housing (111) to achieve the synchronous movement of the second cover body (14) and the first cover body (13). In the first position, the first cover body (13) and the second cover body (14) are relatively closed to cover at least part of the pins (113); and in the second position, the first cover body (13) is stacked on one side of the housing (111) in the thickness direction, the second cover body (14) is stacked on the opposite side of the housing (111) in the thickness direction, and the pins (113) are exposed out of the housing (111).

## Description

### TECHNICAL FIELD

The present disclosure relates to the field of charger technologies, and in particular to a power adapter.

### BACKGROUND

A power adapter is generally configured to connect an electronic device to a power supply and charge the electronic device. An end of a metal pin must meet the requirements of the electrical clearance in the electrical safety specification. The requirements of the electrical clearance are not beneficial to the light-weight and thin design of the power adapter.

### SUMMARY OF THE DISCLOSURE

Based on above, it is necessary to provide a power adapter.

A power adapter is provided in the present disclosure, and includes: a body, having a housing and a pin connected to the housing; a synchronization mechanism, connected to the housing; a first cover body, connected to the synchronization mechanism and capable of moving to a first position and a second position relative to the housing; and a second cover body, connected to the synchronization mechanism and driven by the synchronization mechanism in response to the first cover body moving relative to the housing, so as to achieve a synchronous movement of the second cover body and the first cover body; in response to the first cover body being in the first position, the first cover body is covered with the second cover body to cover at least part of the pin; in response to the first cover body being in the second position, the first cover body is stacked on a side of the housing in a thickness direction of the housing, the second cover is stacked on an opposite side of the housing in the thickness direction, and the pin is exposed to the housing.

### BRIEF DESCRIPTION OF THE DRAWINGS

In order to more clearly describe the embodiments of the present disclosure or the technical example in the prior art, the following will briefly introduce the drawings needed in the embodiments or the prior technical description. Obviously, the drawings in the following description are only some embodiments of the present disclosure. For ordinary technicians in the art, without paying creative labor, and those skilled in the art, without creative work, can also obtain other attached drawings based on these drawings.
FIG. 1 is a schematic structural view of a power adapter according to an embodiment of the present disclosure, wherein a first cover body is in a first position.
FIG. 2 is a schematic structural view after the first cover body is removed from the power adapter as shown in FIG. 1.
FIG. 3 is a schematic exploded view of the power adapter as shown in FIG. 1.
FIG. 4 is a schematic structural view of the power adapter according to an embodiment of the present disclosure, wherein the first cover body is in a second position.
FIG. 5 is a schematic structural view after the first cover body is removed from the power adapter as shown in FIG. 4.
FIG. 6 is a schematic front view of the power adapter as shown in FIG. 4.
FIG. 7 is a schematic cross-sectional view of the power adapter as shown in FIG. 6 along A-A.
FIG. 8 is a schematic cross-sectional view of the power adapter as shown in FIG. 6 along B-B.
FIG. 9 is a schematic structural view of a body of the power adapter according to an embodiment of the present disclosure.
FIG. 10 is a schematic front view of the power adapter as shown in FIG. 1.
FIG. 11 is a schematic cross-sectional view of the power adapter as shown in FIG. 10 along C-C.
FIG. 12 is a schematic cross-sectional view of the power adapter as shown in FIG. 10 along D-D.
FIG. 13 is a schematic structural view of the first cover body of the power adapter according to an embodiment of the present disclosure.
FIG. 14 is a schematic exploded view of the first cover body of the power adapter as shown in FIG. 13.
FIG. 15 is a schematic structural view of the power adapter according to an embodiment of the present disclosure, wherein the first cover body is in a certain position between the first position and the second position.
FIG. 16 is a schematic structural view after the first cover body is removed from the power adapter as shown in FIG. 15.
FIG. 17 is a schematic front view of the power adapter as shown in FIG. 15.
FIG. 18 is a schematic cross-sectional view of the power adapter as shown in FIG. 17 along E-E.
FIG. 19 is a schematic cross-sectional view of the power adapter as shown in FIG. 17 along F-F.
FIG. 20 is a schematic exploded view of the power adapter as shown in FIG. 4.
FIG. 21 is a schematic structural view of a synchronization mechanism of the power adapter according to an embodiment of the present disclosure.
FIG. 22 is a schematic structural view of a slider of the synchronization mechanism as shown in FIG. 21.
FIG. 23 is a schematic structural view of a first swing rod of the synchronization mechanism as shown in FIG. 21.
FIG. 24 is a schematic structural view of a first connecting rod of the synchronization mechanism as shown in FIG. 21.
FIG. 25 is a schematic view of a motion mechanism of the power adapter according to an embodiment of the present disclosure.

List of reference numbers in drawings:
power adapter 10, body 11, sliding groove 11a;
housing 111, main body 111a, boss 111b;
pin 113, synchronization mechanism 12, slider 121;
connecting portion 121a, first arm 121b, second arm 121c;
accommodating groove 121d, shaft hole 121e, limiting rod 121f;
first swing rod 123, first connecting arm 123a, second connecting arm 123b;
second swing rod 125, first connecting rod 127, receiving groove 127a;
second connecting rod 129, first cover body 13, shell 131;
bracket 133, groove 135, second cover body 14;
receiving cavity 15, magnetic member 161, magnetic fitting member 163;
first stabilizer rod 171, second stabilizer rod 173.

### DETAILED DESCRIPTION

In order to facilitate the understanding of the present disclosure, the present disclosure will be described more fully below with reference to the relevant drawings. The drawings show preferred embodiments of the present disclosure. However, the present disclosure can be implemented in many different forms and is not limited to the embodiments described herein. On the contrary, the purpose of providing these embodiments is to make the understanding of the present disclosure more thorough and comprehensive.

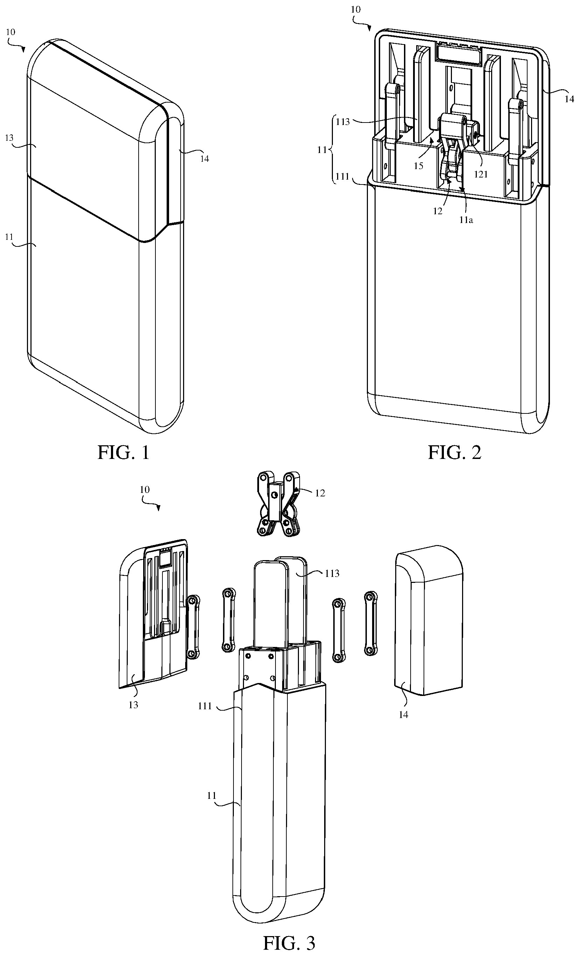

As shown in FIG. 1 and FIG. 2, a power adapter 10 may be configured to connect a power supply and an electronic device, and charge the electronic device. In some embodiments, the electronic device may be a smart phone. In other embodiments, the electronic device may be a device that needs to be charged, such as a tablet computer, a handheld game console, a wearable device, a Bluetooth headset, a watch, etc.

Further as shown in FIG. 3, the power adapter 10 includes a body 11, a synchronization mechanism 12, a first cover body 13 and a second cover body 14. The body 11 includes a housing 111 and a pin 113. The pin 113 and the synchronization mechanism 12 are connected to housing 111. The first cover body 13 and the second cover body 14 are connected to the synchronization mechanism 12.

In this embodiment, the housing 111 is substantially in shape of a rectangular block, and electronic elements such as a circuit board are arranged in the housing 111. In other embodiments, a cross section of the housing 111 may be in shape of a rounded rectangle, a runway, or the like. The runway shape refers to a shape formed by circumscribing two short sides of a rectangle respectively with two semicircles. The pin 113 is made of metal. In the embodiments of the present disclosure, the number of pins 113 is two, and the two pins 113 are arranged at intervals. In other embodiments, the number of pins 113 may be three.

The first cover body 13 may move to a first position and a second position relative to the housing 111. During a process of the first cover body 13 moving relative to the housing 111, the second cover body 14 is driven to move relative to the housing 111 by the first cover body 13 via the synchronization mechanism 12, so as to achieve a synchronous movement of the second cover body 14 and the first cover body 13. The synchronous movement may be understood as that when the first cover body 13 moves, the second cover body 14 immediately follows the first cover body 13 to move, and there may be no time difference between the movement of the first cover body 13 and the movement of the second cover body 14. In some embodiments, when the first cover body 13 is in the first position, it may be considered that the second cover body 14 is also in the first position. When the first cover body 13 is in the second position, it may be considered that the second cover body 14 is also in the second position.

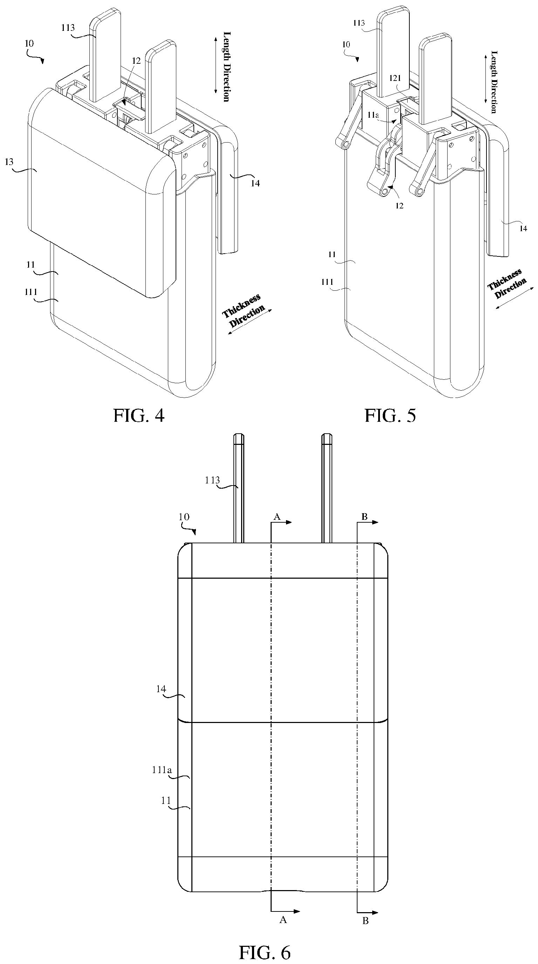

As shown in FIG. 1 and FIG. 2, in the first position, the first cover body 13 and the second cover body 14 are relatively covered, and at least part of the pin 113 is covered. As shown in FIG. 4 and FIG. 5, when the first cover body 13 is in the second position, the first cover body 13 is stacked on a side of the housing 111 in a thickness direction of the housing 111, the second cover body 14 is stacked on an opposite side of the housing 111 in the thickness direction of the housing 111, and the pin 113 is exposed to the housing 111. When the first cover body 13 and the second cover body 14 are in the second position, the pin 113 may be inserted into an external power interface.

In some embodiments of the present disclosure, the first position and the second position may be understood as two limiting positions of the first cover body 13 or the second cover body 14 moving relative to the housing 111. When the first cover body 13 is in the first position, the first cover body 13 and the second cover body 14 are relatively covered to cover the at least part of the pin 113, that is to say, a part of the structure of the pin 113 or all of the structure of the pin 113 may be covered. At this time, an opposite movement of the first cover body 13 and the second cover body 14 reaches a limiting position. Normally, the first cover body 13 and the second cover body 14 cannot continue to close to each other. In the second position, the first cover body 13 may be abut against with the housing 111 and limited by the housing 111, and the second cover body 14 may also be abut against with the housing 111 and limited by the housing 111. The first cover body 13 and the second cover body 14 have reached the limiting position in an open state.

It should be understood that, the second position may also be determined in other ways. For example, in the second position, one or some parts of the synchronization mechanism 12 may abut against with the body 11 and be limited by the body 11, or the movement of the first cover body 13 or the second cover body 14 may be limited by other parts of the power adapter 10. Normally, the first cover body 13 and the second cover body 14 cannot continue to open. In these embodiments, the first cover body 13 may not need to be attached to the housing 111 and limited by the housing 111, and the second cover body 14 may not need to be attached to the housing 111 and limited by the housing 111.

In addition, the second position may be determined in combination with a use state of the power adapter 10. For example, in this embodiment, in the second position, an end surface of the first cover body 13 close to the pin 113, and an end surface of the second cover body 14 close to the pin 113 are flush with an end surface of the housing 111 exposed to the pin 113, so as to define a pin surface of the power adapter 10. The pin surface may be understood as a surface of the power adapter 10 that may match an end surface of a power interface after the power adapter 10 is inserted into the power interface, such as a socket. Further as shown in FIG. 6, an end surface on the uppermost side of the housing 111, an end surface on the uppermost side of the first cover body 13, and an end surface on the uppermost side of the second cover body 14 may constitute the pin surface of the power adapter 10. When the power adapter 10 is inserted into the power interface, the pin surface may cooperate with the end surface of the power interface. When the uppermost end face of the first cover body 13 and the uppermost end face of the second cover body 14 are curved surfaces, it may be considered that a surface of the uppermost end of the first cover body 13, a surface of the uppermost end of the second cover body 14, and the end surface on the uppermost side of the housing 111 define a pin surface.

It should be understood that, the above only lists several ways to determine the first position and the second position, so as to clearly explain a relative position between the first cover body 13 and the body 11 or the pins 113, or a relative position between the second cover body 14 and the body 11 or the pins 113, in the first position or in the second position. However, the methods listed above should not be interpreted as strict restrictions on the above-mentioned embodiments. For example, in the second position, it is not necessary that the uppermost end of the first cover body 13 and the second cover body 14 be flush with the uppermost end surface of the housing 111. Even if in the second position, a top end of the first cover body 13 and a top end of the second cover body 14 cannot be flush with a top end of the housing 111, a thickness of the first cover body 13 is superimposed on a thickness of the housing 111, and a thickness of the second cover body 14 is superimposed on a thickness of the housing 111, safety distance requirements for electrical clearance in the electrical safety specifications can still be met.

The connection between the pin 113 and the housing 111 may be fixed or movable. For example, in this embodiment, the pin 113 is relatively fixed with the position of the housing111. The pin 113 may be molded into a whole with the housing 111 to be fixedly connected to the housing 111, and the pin 113 protrudes from an end of the housing 111. In other embodiments, the pin 113 is flexibly arranged on the housing 111, and in this embodiment, after the first cover body 13 and the second cover body 14 move to the second position and the pin 113 extends to an end of the housing 111, the pin 113 may be inserted into the external power interface. When the power adapter 10 is not used, the first cover body 13 and the second cover body 14 may be driven to the first position, and the pin 113 may be retracted into the housing 111, so as to reduce a length size of the power adapter 10, thereby improving the portability of the power adapter 10.

In the power adapter 10 according to the above-mentioned embodiments, the first cover body 13, and the second cover body 14 may move synchronously relative to the housing 111, so as to improve the convenience of use. In the second position, since the first cover body 13 and the second cover body 14 are stacked on both sides of the housing 111 in the thickness direction of the housing 111, and the pin 113 is exposed to the housing 111, as long as a superposition of a thickness of the first cover body 13 and a thickness of the housing 111 may make an electrical clearance, which is between an outer edge of the first cover body 13 and an edge of the pin 113 located on the same side as the outer edge of the first cover body 13, meet a safety distance required in the electrical safety specifications, and a superposition of a thickness of the second cover body 14 and a thickness of the housing 111 may make an electrical clearance, which is between an outer edge of the second cover body 14 and an edge of the pin 113 located on the same side as the outer edge of the second cover body 14, meet the safety distance required in the electrical safety specifications, and thus it may be possible to ensure the use safety of the power adapter 10. In this way, in the thickness direction of the housing 111, a distance between the edge of the pin 113 and the outer edge of the housing 111 may be set less than the safe distance requirements in the electrical safety specification, so as to reduce the thickness of the housing 111. In the first position, the first cover body 13 and the second cover body 14 are relatively covered to cover the at least part of the pin 113, and thus the first cover body 13 and the second cover body 14 may protect the pin 113. In addition, an entire thickness of the power adapter 10 in this state may be smaller, for example, the thickness of the power adapter 10 may be the thickness of the housing 111, and thus the power adapter 10 may have a thinner thickness, thereby realizing the light-weight and thin design of power adapter 10 and improving the portability of power adapter 10.

In the related art, for the power adapter 10, when pin 113 of the power adapter 10 is inserted into the external power interface, such as the socket, in order to prevent the power of the external power interface from leaking out through pin 113 and causing harm to users, a minimum vertical distance between the edge of the pin 113 and the outer surface of the housing 111 at the end where pin 113 is located, needs to be greater than or substantially equal to a preset value (also called the safety distance). For example, for the power adapter 10, the safety distance in the national standard requirements is 6.5mm, 5.1mm, or 7.9mm. For the power adapter 10 applicable to other countries, the safety distance may be other values.

Further as shown in FIG. 6, FIG. 7 and FIG. 8, in this embodiment, when the first cover body 13 and the second cover body 14 are in the second position, a distance s1 between the leftmost edge of the pin 113 and a surface of the first cover body 13 away from the body 11 (that is, the leftmost surface of the first cover body 13) is greater than or substantially equal to the preset value. Similarly, a distance s2 between the rightmost edge of the pin 113 and a surface of the second cover body 14 away from the body 11 (that is, the rightmost surface of the second cover body 14) is greater than or substantially equal to the preset value. In other words, in the thickness direction of the housing 111, the distance between the edge of the pin 113 and the outer edge of the housing 111 may be less than the preset value, as long as in the second position, the distance between the outer edge of the first cover body 13 and the edge of the pin 113 located on the same side as the outer edge of the first cover body 13 is greater than or substantially equal to the preset value, and the distance between the outer edge of the second cover body 14 and the edge of the pin 113 located on the same side as the outer edge of the second cover body 14 is greater than or substantially equal to the preset value, and thus it may ensure that the electrical clearance of the power adapter 10 in the second position meets the requirements of the electrical safety specification, which may also ensure the use safety of the power adapter 10.

In the related art, the distance between the outer edge of the housing 111 of the power adapter 10 and the edge of the pin 113 is generally fixed, or the distance between the surface of the power adapter 10 for the user's finger to contact and apply force and the edge of the pin 113 is generally fixed, and thus it is requirement that the distance between the edge of the pin 113 of the power adapter 10 and the outer edge of the housing 111 should not be less than the safety distance in the electrical safety specification, thereby ensuring the electrical safety. Therefore, in the related art, the thickness of the power adapter 10 is usually thicker. For example, a width of the pin 113 of the power adapter 10 is 6.3mm, in order to meet the requirements of the safety provisions of the power adapter 10 in the national standard, the thickness of the power adapter 10 should generally be set to 19.3mm (namely, 6.3mm+6.5mm+6.5mm=19.3mm) or more.

Further as shown in FIG. 6, FIG. 7 and FIG. 8, the thickness of the power adapter 10 in the present disclosure and the thickness of the power adapter 10 in the related art are compared and analyzed below. In this embodiment, the thickness of the first cover body 13 and the body 11 may be superposed in the second position, and the thickness of the second cover body 14 may be superposed with the thickness of the body 11, and thus it is only necessary to make the distance s1 between the outer edge of the first cover body 13 and the edge of the pin 113 located on the same side as the outer edge of the first cover body 13 in the second position be greater than or substantially equal to the preset value (for example, 6.5mm specified in the national standard). In addition, in the second position, the distance s2 between the outer edge of the second cover body 14 and the edge on the same side of the pin 113 also may be greater than or substantially equal to the preset value, which can meet the requirements of the electrical safety specifications.

In other words, in the power adapter 10 of the present disclosure, the housing 111 is arranged with a peripheral surface at the end of the pin 113, and the minimum distance between the peripheral surface and the edge of the pin 113 is only a part of the preset value (i.e., the safe distance). Therefore, the thickness of the body 11 in the power adapter 10 of the present disclosure must be less than the thickness of the power adapter 10 in the related art. For example, in some embodiments, a width of the pin 113 of the power adapter 10 is 6.3mm, the distance between the outer edge of the housing 111 and the edge of the pin 113 located on the same side as the outer edge of the housing 111 may be set to 2.1mm, that is, in the thickness direction of the housing 111, a distance between the leftmost edge of the pin 113 and the leftmost edge of the housing 111 and a distance between the rightmost edge of the pin 113 and the rightmost edge of the housing111 may be set to 2.1mm. At this time, the thickness of the body 11 is 10.5mm (namely, 6.3mm+2.1mm+2.1mm=10.5mm). When the first cover body 13 and the second cover body 14 are in the second position, as long as the s1 and the s2 are greater than or substantially equal to the preset value (for example, 6.5 mm specified in the national standard), the requirements of the electrical safety specification may be met. Compared with the thickness (namely, 19.3mm) of the power adapter 10 in the related art, the thickness (namely, 10.5mm) of the body 11 of the power adapter 10 according to the embodiments of the present disclosure may be reduced by nearly 46%.

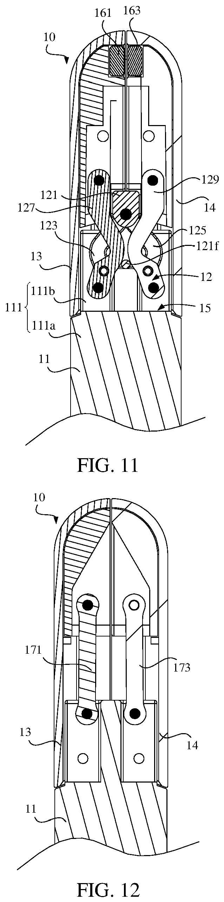

When the first cover body 13 and the second cover body 14 are in the first position, the thickness of the body 11 may be the thickness of the power adapter 10 in the first position without the leftmost side of the first cover body 13 protruding out of the leftmost side of the housing 111, and without the rightmost side of the second cover body 14 protruding out of the rightmost side of the housing 111 (as shown in FIG. 11, in this embodiment, the leftmost side of the first cover body 13 in the first position is flush with the leftmost side of the housing 111, and the rightmost side of the second cover body 14 is flush with the rightmost side of the housing 111). It may be seen that the thickness of the power adapter 10 in the present disclosure in the first position is thinner than that of the power adapter 10 in the related art, thus facilitating the miniaturized design, and light-weight and thin design of the power adapter 10.

Compared with the related art, in the power adapter 10 provided in the present disclosure, the first cover body 13 and the second cover body 14 are connected to the body 11 through the synchronization mechanism 12, and the synchronization mechanism 12 may realize the synchronous opening or synchronous closing of the first cover body 13 and the second cover body 14, so as to improve the convenience of use. Moreover, when the first cover body 13 and the second cover body 14 are in the first position, the at least part of the pin 113 may be covered by the first cover body 13 and the second cover body 14, thereby protecting the pin 113 from being damaged and preventing other objects from being damaged by the pin 113. When the power adapter 10 needs to be used, the first cover body 13 and the second cover body 14 may be moved to the second position, so that the pin 113 is exposed to the housing 111.

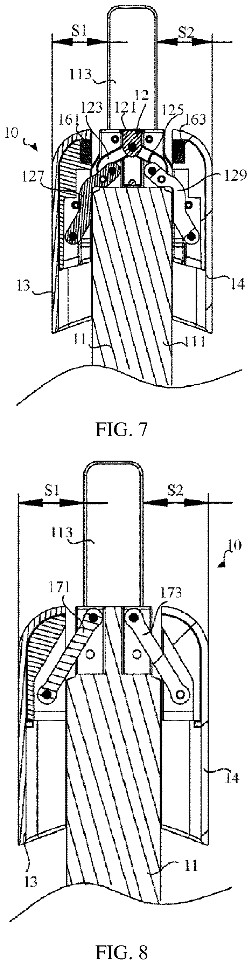

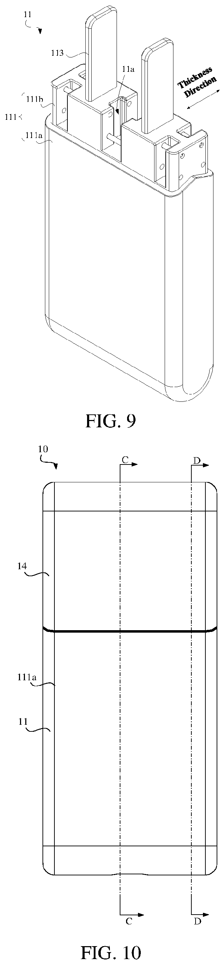

As shown in FIG. 9, in this embodiment, the housing 111 may include a main body 111a and a boss 111b protruded from an end of the main body 111a, and the pin 113 is connected to the boss 111b. A cross-sectional shape of the boss 111b may be similar to a cross-sectional shape of the main body 111a, and a cross-sectional size of the boss 111b is smaller than a cross-sectional size of the main body 111a. In some embodiments, a height difference may be defined between a peripheral surface of the boss 111b and the main body 111a, so as to form a stepped structure. The pin 113 may be fixedly connected to the boss 111b, and the pin 113 is protruded from an end of the boss 111b away from the main body 111a. In the second position, the first cover body 13 is stacked on a side of the main body 111a in a thickness direction of the main body 111a, and the second cover body 14 is stacked on an opposite side of the main body 111a in the thickness direction of the main body 111a (as shown in FIG. 7 and FIG. 8).

In some embodiments, as shown in FIG. 10, FIG. 11 and FIG. 12, in the first position, the cover boss 111b is relatively covered by the first cover body 13 and the second cover body 14. In some embodiments, in this embodiment, in the first position, the first cover body 13 and the second cover body 14 are enclosed to define a receiving cavity 15, and the receiving cavity 15 is configured to receive the pin 113 and the boss 111b. In some embodiments, in the first position, a peripheral outer surface of the first cover body 13 is flush with a peripheral outer surface of a side of the main body 111a, and a peripheral outer surface of the second cover body 14 is flush with a peripheral outer surface of an opposite side of the main body 111a. In other words, the peripheral outer surface of the first cover body 13 and the peripheral outer surface of the second cover body 14 may be connected with the peripheral outer surface of the main body 111a to define a continuous contour surface, thereby improving an appearance integrity of the power adapter 10.

In some embodiments, when the pin 113 is relatively covered by the first cover body 13 and the second cover body 14, the pin 113 is hidden in the receiving cavity 15 defined by the first cover body 13 and the second cover body 14. When the first cover body 13 is in the first position, the structural arrangement may prevent liquid or dust from entering the receiving cavity 15 from a gap between the first cover body 13 and the second cover body 14, thereby playing a better role in protecting the pin 113.

In some embodiments, one of the first cover body 13 and the second cover body 14 may be arranged with a magnetic member 161, and the other of the first cover body 13 and the second cover body 14 may be arranged with a magnetic fitting member 163. In the first position, the magnetic member 161 is attracted to the magnetic fitting member 163. In the embodiment, a suction force having an appropriate size is defined between the first cover body 13 and the second cover body 14, so as to reduce a gap of the connection between the first cover body 13 and the second cover body 14, and thus the first cover body 13 and the second cover body 14 may reliably keep in an attached state. The magnetic member 161 may be a magnet, and the magnetic fitting member 163 may be a magnet or a magnetic metal member, such as iron, cobalt, nickel and their alloys.

In some embodiments, in the second position, the magnetic member 161 may be opposite to the magnetic fitting member 163, and a magnetic attraction is formed between the magnetic member 161 and the magnetic fitting member 163, so that the first cover body 13 is attached to a side of the main body 111a, and the second cover body 14 fits on an opposite side of the main body 111a. The first cover body 13 and the second cover body 14 may be reliably attached to the main body 111a via the magnetic attraction between the magnetic member 161 and the magnetic fitting member 163, so as to prevent the first cover body 13 and the second cover body 14 from shaking relative to the housing 111, thereby improving the stability of the positioning of the first cover body 13 and the second cover body 14 on the housing 111, and improving the convenience of use (as shown in FIG. 7).

In other embodiments, the housing 111 may further be arranged with a magnet, and in the second position, the magnetic member 161 and the magnetic fitting member 163 are attracted to the magnet. The structural arrangement may further improve the reliability that the first cover body 13 and the second cover body 14 are attached to the main body 111a.

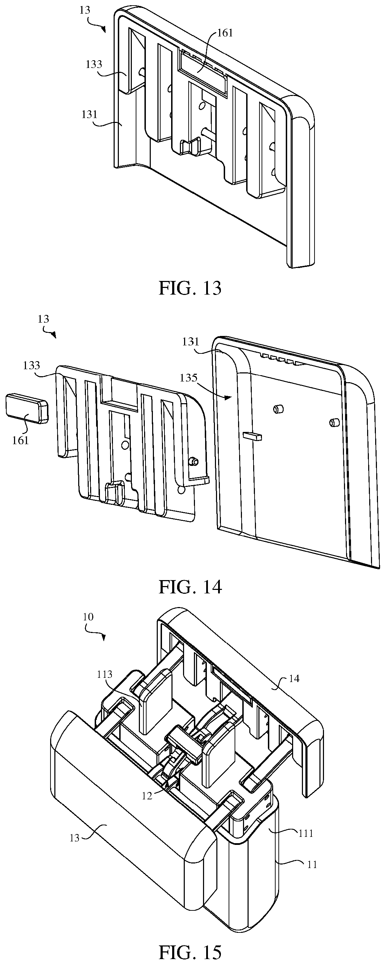

As shown in FIG. 13 and FIG. 14, in some embodiments, the first cover body 13 includes a shell 131 and a bracket 133 connected to the shell 131. the shell 131 defines a groove 135, and the bracket 133 is arranged in the groove 135 and fixedly connected with the shell 131. The bracket 133 may be set to a sink configured to receive the synchronization mechanism 12, the pin 113, and the magnetic member 161 (or the magnetic fitting member 163). The synchronization mechanism 12 is connected to at least one of the shell 131 and the bracket 133. In this embodiment, a connection structure between the synchronization mechanism 12 and the first cover body 13 may be conveniently processed on the shell 131 or the bracket 133, thereby improving the efficiency of processing and assembly of the power adapter 10. A material of the bracket 133 may be the same as that of the shell 131, for example, both are plastic materials. The material of the bracket 133 may be different from that of the shell 131. For example, a hardness of the bracket 133 may be less than that of the shell 131, so as to prevent the pin 113 from being worn during the movement of the bracket 133. In other embodiments, the bracket 133 may be integrally formed with the shell 131. The structure of the second cover body 14 is similar to that of the first cover body 13, which will not be repeated here.

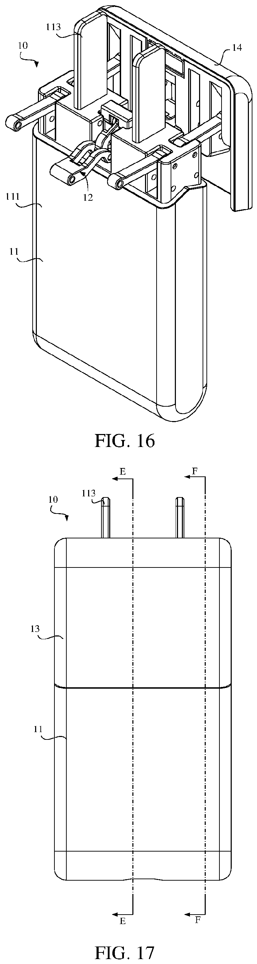

As shown in FIG. 15 and FIG. 16, when the first cover body 13 switches between the first position and the second position, a height direction of the first cover body 13 is substantially parallel to a length direction of the pin 113. Further as shown in FIG. 17, FIG. 18 and FIG. 19, when the first cover body 13 switches between the first position and the second position, a height direction of the second cover body 14 is also substantially parallel to the length direction of the pin 113. This arrangement may utilize the mechanical structure to make the first cover body 13 be abutted with the second cover body 14 reliably and smoothly in the first position, and it may also ensure that the first cover body 13 and the second cover body 14 are reliably and stably overlapped or attached to the outer surface of the main body 111a when they are in the second position.

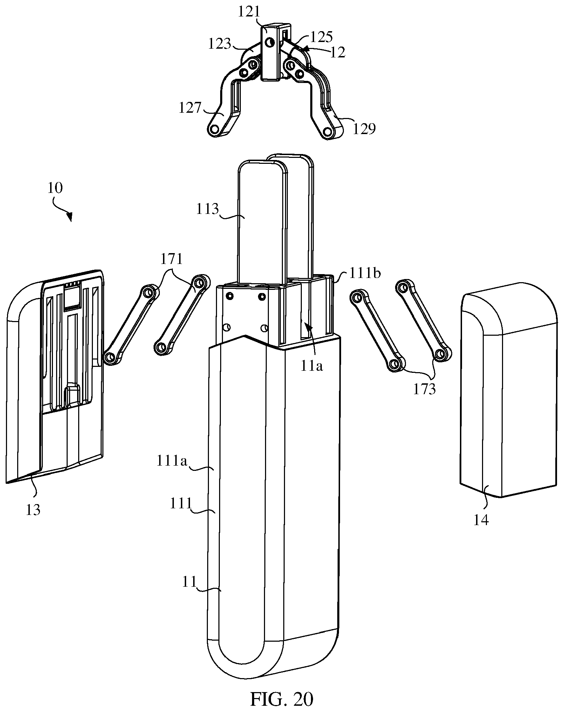

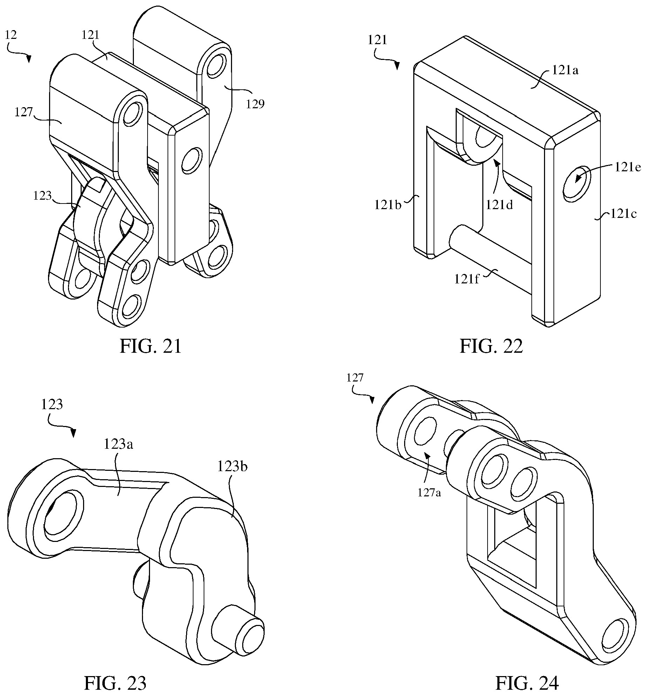

In some embodiments, as shown in FIG. 20 and FIG. 21, the synchronization mechanism 12 includes a slider 121, a first swing rod 123, a second swing rod 125, a first connecting rod 127 and a second connecting rod 129. The slider 121 is in a sliding fit with the housing 111. An end of the first swing rod 123 and an end of the second swing rod 125 are rotationally connected to the slider 121, an opposite end of the first swing rod 123 is rotationally connected to the first connecting rod 127, and an opposite end of the second swing rod 125 is rotationally connected to the second connecting rod 129. An end of the first connecting rod 127 and an end of the second connecting rod 129 are rotationally connected to the housing 111, an opposite end of the first connecting rod 127 is rotationally connected to the first cover body 13, and an opposite end of the second connecting rod 129 is rotationally connected to the second cover body 14.

As shown in FIG. 20, in the embodiment, the number of the pins 113 is two, the boss 111b is arranged with a sliding groove 11a, the sliding groove 11a is located between the two pins 113, and the slider 121 is in a sliding fit with the sliding groove 11a. When the first cover body 13 switches between the first position and the second position, the slider 121 slides along the sliding groove 11a and is limited by the sliding groove 11a. In the thickness direction of the housing 111, the sliding groove 11a extends to two opposite sides of the boss 111b, that is, the sliding groove 11a defines a notch on the boss 111b. During a sliding process of the slider 121 relative to the boss 111b, the first swing rod 123 and the second swing rod 125 move in the notch, thereby reducing interference between the first swing rod 123 and/or the second swing rod 125 and the boss 111b.

The setting of the boss 111b is conducive to the forming processing of the sliding groove 11a, and the first cover body 13 and the second cover body 14 may be configured to cover the boss 111b in the first position, so that the power adapter 10 has a relatively simple appearance. It should be understood that, the boss 111b is not necessary. In some embodiments without the boss 111b, the pin 113 and the synchronization mechanism 12 may be directly connected to the main body 111a, and the main body 111a may define a notch configured to avoid the first swing rod 123 and the second swing rod 125.

In some embodiments, in the first position, at least part of the slider 121 extends out of the sliding groove 11a, and the part of the slider 121 extending out of the sliding groove 11a may enter into the receiving cavity 15 defined by the first cover body 13 and the second cover body 14 (as shown in FIG. 2). In the second position, the slider 121 is accommodated in the sliding groove 11a (as shown in FIG. 5). In some embodiments, the first swing rod 123 and the second swing rod 125 are symmetrically arranged on two opposite sides of the slider 121, and the first connecting rod 127 and the second connecting rod 129 are symmetrically arranged on the two opposite sides of the slider 121 (as shown in FIG. 7). This setting may make the slider 121 move in a straight line in the sliding groove 11a, thereby maintaining the smoothness of sliding of the slider 121. Since the slider 121 is connected to the first swing rod 123 and the second swing rod 125, the first swing rod 123 is connected to the first connecting rod 127, the first connecting rod 127 is connected to the housing 111, the second swing rod 125 is connected to the second connecting rod 129, and the second connecting rod 129 is connected to the housing 111, through the swing stroke design of the first connecting rod 127, the first swing rod 123, the second connecting rod 129, and the second swing rod 125, the slider 121 may be prevented from falling out of the sliding groove 11a in the first position, thereby ensuring that the first cover body 13 may be smoothly switched from the first position to the second position.

As shown in FIG. 21 and FIG. 22, in some embodiments, the slider 121 is substantially U-shaped. The slider 121 may include a connecting portion 121a, a first arm 121b, and a second arm 121c which are integrally formed. The first arm 121b is opposite to the second arm 121c, and the connecting portion 121a is connected between the first arm 121b and the second arm 121c. The first swing rod 123 and the second swing rod 125 are rotationally connected to the connecting portion 121a. In some embodiments, an accommodating groove 121d is defined in the middle of the connecting portion 121a, and an end of the first swing rod 123 and an end of the second swing rod 125 are inserted into the accommodating groove 121d. The connecting portion 121a defines a shaft hole 121e, and the shaft hole 121e extends to the outer surface of at least one end of the connecting portion 121a. The slider 121 may include a rotating shaft (not shown). The rotating shaft is inserted through the shaft hole 121e and penetrates an end of the first swing rod 123 and an end of the second swing rod 125. The first swing rod 123 and the second swing rod 125 are both rotating with the rotating shaft, and thus the first swing rod 123the second swing rod 125 may swing relative to the slider 121.

Further as shown in FIG. 23, the structure of the first swing rod 123 is similar to that of the second swing rod 125. Taking the first swing rod 123 as an example, the first swing rod 123 includes an a first connecting arm 123a and a second connecting arm 123b which are integrally formed. An end of the first connecting arm 123a is inserted into the accommodating groove 121d of the slider 121 and is rotationally connected with the slider 121, and an opposite end of the first connecting arm 123a is connected to an end of the second connecting arm 123b. An opposite end of the second connecting arm 123b is rotationally connected to the first connecting rod 127, and an axis where the first swing rod 123 rotates relative to the first connecting rod 127 is located between an axis of where the first connecting rod 127 rotates relative to the housing 111 and an axis where the first connecting rod 127 rotates relative to the first cover body 13. A thickness of the first connecting arm 123a is less than that of the second connecting arm 123b, and an end of the second connecting rod 129 inserted in the accommodating groove 121d has a structure similar to that of the first connecting arm 123a, so that the first swing rod 123 and the second swing rod 125 inserted in the accommodating groove 121d have a relatively small thickness when the first swing rod 123 and the second swing rod 125 are overlapped. In other words, the accommodating groove 121d has a relatively small size.

The above-mentioned structure of the second connecting arm 123b may increase the structural strength of the first swing rod 123, so that the first swing rod 123 may be driven by the first connecting rod 127 and move smoothly. A part of the second swing rod 125 configured to connect with the second connecting rod 129 has a structure similar to that of the second connecting arm 123b, thereby increasing the structural strength of the second swing rod 125, and thus the second swing rod 125 may be driven by the second connecting rod 129 and move smoothly. In some embodiments, an axis where the second swing rod 125 rotates relative to the second connecting rod 129 is located between an axis where the second connecting rod 129 rotates relative to the housing 111 and an axis where the second connecting rod 129 rotates relative to the second cover body 14.

In some embodiments, an included angle may be defined between the first connecting arm 123a and the second connecting arm 123b, so as to reduce the space required for the swing of the first swing rod 123, thereby improving the structural compactness of the synchronization mechanism 12 and the power adapter 10. The second swing rod 125 has a similar structure, which may also improve the structural compactness of the synchronization mechanism 12 and the power adapter 10, which will not be repeated here.

As shown in FIG. 24, a receiving groove 127a is defined on an end of the first connecting rod 127 configured to connect the first swing rod 123, so that the first connecting rod 127 is substantially U-shaped. Further as shown in FIG. 23, the second connecting arm 123b is inserted through the receiving groove 127a and is rotationally connected with the first connecting rod 127. By arranging the receiving groove 127a, an axis where the first swing rod 123 rotates relative to the first connecting rod 127 may be easily to be arranged between an axis where the first connecting rod 127 rotates relative to the housing 111 and an axis where the first connecting rod 127 rotates relative to the first cover body 13. In addition, by arranging the receiving groove 127a, the movement of the second connecting arm 123b may be limited by the first connecting rod 127 via parts of both sides of the receiving groove 127a, so that the first swing rod 123 may swing stably relative to the first connecting rod 127, thereby preventing the first swing rod 123 from falling out of the first connecting rod 127, and thus it is possible to improve the working reliability of the synchronization mechanism 12. An end of the second connecting rod 129 configured to connect with the second swing rod 125 has a similar structure, which will not be repeated here.

In some embodiments, a middle part of the first connecting rod 127 may be bent, and the bent structure may be configured to avoid the main body 111a in the second position (as shown in FIG. 7), so as to prevent the appearance integrity of the main body 111a from being damaged, and improve the structural compactness of the power adapter 10. A middle part of the second connecting rod 129 may also be bent, and has a function similar to that of the first connecting rod 127, which will not be repeated here.

In some embodiments, as shown in FIG. 22, a limiting rod 121f may be arranged on an end of the first arm 121b/the second arm 121c away from the connecting portion 121a. The limiting rod 121f is connected between the first arm 121b and the second arm 121c, and may be integrally formed with the first arm 121b and the second arm 121c. The limiting rod 121f may be substantially parallel to the length direction of the connecting portion 121a. The limiting rod 121f may improve the structural stability of the first arm 121b and the second arm 121c, so that the slider 121 may slide stably in the sliding groove 11a. In some embodiments, the limiting rod 121f may also be configured to positionally limit the first connecting rod 127 and the second connecting rod 129, so as to positionally limit the first connecting rod 127 and the second connecting rod 129 in the first position, thereby improving the operation reliability of the synchronization mechanism 12 (as shown in FIG. 11).

As shown in FIG. 20, the power adapter 10 may also include a first stabilizer rod 171 and a second stabilizer rod 173. An end of the first stabilizer rod 171 and an end of the second stabilizer rod 173 are rotatably connected to the housing 111, an opposite end of the first stabilizer rod 171 is rotatably connected to the first cover body 13, and an opposite end of the second stabilizer rod 173 is rotatably connected to the second cover body 14. In some embodiments, the structure of the first stabilizer rod 171 is similar to that of the second stabilizer rod 173, and the first stabilizer rod 171 and the second stabilizer rod 173 may be arranged symmetrically on two opposite sides of the slider 121. The setting of the first stabilizer rod 171 and the second stabilizer rod 173 may improve the stability of the movement of the first cover body 13 and the second cover body 14.

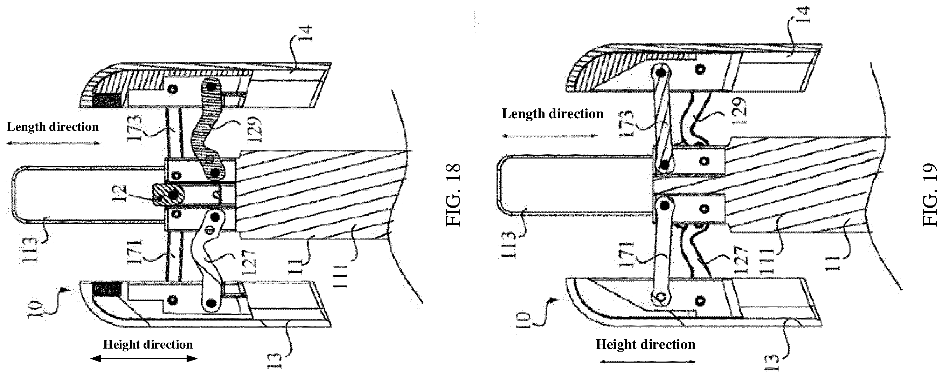

In some embodiments, as shown in FIG. 18 and FIG. 19, the first stabilizer rod 171, the first cover body 13, the first connecting rod 127 and the housing 111 may form a parallelogram mechanism, so that the first cover body 13 may maintain posture during the process that the first cover body 13 moves relative to the housing 111, that is, as described above, the height direction of the first cover body 13 may be substantially parallel to the length direction of the pin 113. Similarly, the second stabilizer rod 173, the second cover body 14, the second connecting rod 129 and the housing 111 may form another parallelogram mechanism, so that the second cover body 14 may maintain posture during a process that the second cover body 14 moves relative to the housing 111, that is, as described above, the height direction of the second cover body 14 may be substantially parallel to the length direction of the pin 113.

In some embodiments, an axis where the first stabilizer rod 171 rotates relative to the housing 111 and an axis where the first connecting rod 127 rotates relative to the housing 111 are arranged at intervals along the length direction of the pin 113. An axis where the first stabilizer rod 171 rotates relative to the first cover body 13 and an axis where the first connecting rod 127 rotates relative to the first cover body 13 are arranged at intervals along the height direction of the first cover body 13. A connecting line between the axis where the first stabilizer rod 171 rotates relative to the housing 111 and the axis where the first connecting rod 127 rotates relative to the housing 111 is substantially parallel to a connecting line between the axis where the first stabilizer rod 171 rotates relative to the first cover body 13 and the axis where the first connecting rod 127 rotates relative to the first cover body 13. A connecting line between the axis where the first stabilizer rod 171 rotates relative to the housing 111 and the axis where the first stabilizer rod 171 rotates relative to the first cover body 13 and the axis where the first connecting rod 127 rotates relative to the housing 111 and the axis where the first connecting rod 127 rotates relative to the first cover body 13. In this way, a parallelogram mechanism may be formed on a side of the first cover body 13. By using the kinematic characteristics of the parallelogram mechanism, the first cover body 13 may maintain the posture substantially parallel to a part of the body 11 (for example, the length direction of the pin 113) all the time during a process that the first cover body 13 moves relative to the housing 111.

Similarly, an axis where the second stabilizer rod 173 rotates relative to the housing 111 and an axis where the second connecting rod 129 rotates relative to the housing 111 are arranged at intervals along the length direction of the pin 113. An axis where the second stabilizer rod 173 rotates relative to the second cover body 14 and an axis where the second connecting rod 129 rotates relative to the second cover body 14 are arranged at intervals along the height direction of the second cover body 14. A connecting line between the axis where the second stabilizer rod 173 rotates relative to the housing 111 and the axis where the second connecting rod 129 rotates relative to the housing 111 is substantially parallel to a connecting line between the axis where the second stabilizer rod 173 rotates relative to the second cover body 14 and the second connecting rod 129 rotates relative to the second cover body 14. A connecting line between the axis where the second stabilizer rod 173 rotates relative to the housing 111 and the axis where the second stabilizer rod 173 rotates relative to the second cover body 14 is substantially parallel to a connecting line between the axis where the second connecting rod 129 rotates relative to the housing 111 and the axis where the second connecting rod 129 rotates relative to the second cover body 14. In this way, a parallelogram mechanism is formed on a side of the second cover body 14. By using the kinematic characteristics of the parallelogram mechanism, the second cover body 14 may maintain the posture substantially parallel to the part of the body 11 (for example, the length direction of the pin 113) all the time during a process that the second cover body 14 moves relative to the housing 111.

Further as shown in FIG. 18 and FIG. 19, in this embodiment, the axis where the first stabilizer rod 171 rotates relative to the housing 111 is closer to a free end of the pin 113 than the axis where the first connecting rod 127 rotates relative to the housing 111. The free end of the pin 113 may be simply understood as an end that the pin 113 is configured to plug into an external power supply. The axis where the second stabilizer rod 173 rotates relative to the housing 111 is closer to the free end of the pin 113 than the axis where the second connecting rod 129 rotates relative to the housing 111. In other embodiments, a position of the axis where the first stabilizer rod 171 rotates relative to the housing 111 and a position of the axis where the first connecting rod 127 rotates relative to the housing 111 may be interchanged, that is, the axis where the first connecting rod 127 rotates relative to the housing 111 may be made closer to the free end of the pin 113 than the axis where the first stabilizer rod 171 rotates relative to the housing 111. A position of the axis where the second stabilizer rod 173 rotates relative to the housing 111 and a position of the axis where the second connecting rod 129 rotates relative to the housing 111 may also be interchanged, which will not be repeated here.

In this embodiment, the number of first stabilizer rods 171 is two, and the two pins 113 are disposed between the two first stabilizer rods 171. The number of second stabilizer rod 173 is two, and the two pins 113 are disposed between the two second stabilizer rods 173. The above settings may make the force of the synchronization mechanism 12 on both sides of the pin 113 more balanced, thereby improving the motion stability of the first cover body 13, the second cover body 14, and the synchronization mechanism 12, and extending the service life of the synchronization mechanism 12. It should be understood that, in other embodiments, the first stabilizer rod 171 may be set as one, and the second stabilizer rod 173 may also be set as one.

In other embodiments, the first swing rod 123 may also be rotationally connected to the first stabilizer rod 171, and the first connecting rod 127 may not need to be rotationally connected to the first swing rod 123. The second swing rod 125 may be rotationally connected to the second stabilizer rod 173, and the second connecting rod 129 may not need to be rotationally connected to the second swing rod 125. By the arrangement of this embodiment, it may also realize the synchronous movement of the first cover body 13 and the second cover body 14, and it may be understood that the function of the first stabilizer rod 171 is the same as that of the first connecting rod 127 as described above, and the function of the second stabilizer rod 173 is the same as that of the second connecting rod 129 as described above. Therefore, in this embodiment, the technical solutions may still be described in the way as described above, with the difference that a position of the first connecting rod 127 and a position of the second connecting rod 129 have changed.

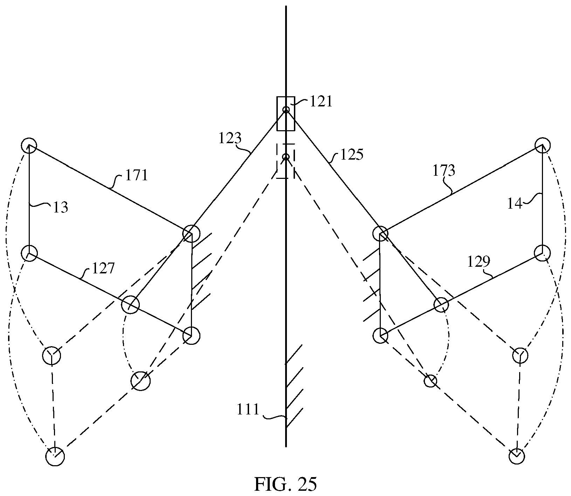

As shown in FIG. 25, FIG. 25 is a schematic view of a motion mechanism of the power adapter according to an embodiment of the present disclosure. When the first cover body 13 is in the first position, positions of the slider 121, the first swing rod 123, the first connecting rod 127, the first stabilizer rod 171, and the first cover body 13 are respectively shown as solid lines on a left side in FIG. 25, and positions of the second swing rod 125, the second connecting rod 129, the second stabilizer rod 173 and the second cover body 14 are respectively shown as solid lines on a right side in FIG. 25. When the first cover body 13 is in the second position, positions of the slider 121, the first swing rod 123, the first connecting rod 127, the first stabilizer rod 171, and the first cover body 13 are respectively shown as dotted lines on the left side in FIG. 25, and positions of the second swing rod 125, the second connecting rod 129, the second stabilizer rod 173, and the second cover body 14 are respectively shown as dotted lines on the right side in FIG. 25. During a process that the first cover body 13 moves from the first position to the second position, the height direction of the first cover body 13 may always be substantially parallel to a part of the body 11 (such as the length direction of the pin 113) due to the existence of the left parallelogram mechanism.

In some embodiments, during the process that the first cover body 13 moves from the first position to the second position, the first cover body 13 drives the first connecting rod 127 to rotate relative to the housing 111, and the first connecting rod 127 drives the first swing rod 123 connected to the first connecting rod 127 to move. Since the length of the first swing rod 123 is fixed, the first swing rod 123 may pull the slider 121 to slide along the sliding groove 11a. Since the length of the second swing rod 125 is fixed, the second swing rod 125 may drive the second connecting rod 129 connected to the second swing rod 125 to rotate relative to the housing 111 during a process that the slider 121 slides along the sliding groove 11a. Due to the existence of the right parallelogram mechanism, the height direction of the second cover body 14 may always be substantially parallel to the part of the body 11 (such as the length direction of the pin 113) during the moving process. Therefore, the setting of the above structure realizes the synchronous movement of the first cover body 13 and the second cover body 14, and by using the connecting rod transmission mechanism, the structure of the transmission mechanism is relatively simple, compact and reliable.

Compared with other movement modes such as the cover turning over relative to the body 11, in the power adapter 10 according to some embodiments of the present disclosure, the first cover body 13 and the second cover body 14 of the power adapter 10 may move horizontally relative to the body 11 (that is, the posture remains unchanged during the moving process). In addition, during a process that the first cover body 13 and the second cover body 14 switch from the first position to the second position, moving space required for the first cover body 13 and the second cover body 14 may be small, and a vertical distance between the fingers of the user operating the first cover body 13 (or the second cover body 14) and the pin 113 firstly increases and then decreases. Near the second position, even if the power adapter 10 is connected with the external power interface, the distance between the user's fingers and the pin 113 may still meet the requirements of the electrical safety specification, and thus it is not easy to get electric shock.

In other embodiments, a gear transmission mechanism may be configured to replace the connecting rod transmission mechanism. For example, the synchronization mechanism 12 may include a first gear and a second gear connected to the first gear in a transmission manner. The first gear is connected to the first cover body 13 and is rotationally connected with the housing 111. The second gear is connected to the second cover body 14 and is rotationally connected with the housing 111. The first gear may be engaged with the second gear so that the first gear and the second gear can rotate synchronously. More than one intermediate gear may be meshed between the first gear and the second gear to reduce the outer diameter of the first gear, the second gear and the intermediate gear, and improve the structural compactness of the power adapter 10 while realizing the synchronous movement of the first cover body 13 and the second cover body 14.

The technical features of the above-mentioned embodiments can be combined arbitrarily. In order to make the description concise, all possible combinations of the various technical features in the above-mentioned embodiments are not described. However, as long as there is no contradiction in the combination of these technical features, all should be considered within the scope of this specification.

The above-mentioned embodiments only express several implementation modes of the present disclosure, and the description is relatively specific and detailed, but it should not be understood as a limitation on the scope of the present disclosure. It should be noted that for those skilled in the art, without departing from the concept of the present disclosure, several modifications and improvements can be made, and these all fall within the scope of the present disclosure. Therefore, the scope of the present disclosure should be subject to the appended claims.

## Claims

1. A power adapter, **characterized by** comprising:
a body, comprising a housing and a pin connected to the housing;
a synchronization mechanism, connected to the housing;
a first cover body, connected to the synchronization mechanism and capable of moving to a first position and a second position relative to the housing; and
a second cover body, connected to the synchronization mechanism and driven by the synchronization mechanism in response to the first cover body moving relative to the housing, so as to achieve a synchronous movement of the second cover body and the first cover body; wherein,
in response to the first cover body being in the first position, the first cover body is covered with the second cover body to cover at least part of the pin;
in response to the first cover body being in the second position, the first cover body is stacked on a side of the housing in a thickness direction of the housing, the second cover is stacked on an opposite side of the housing in the thickness direction, and the pin is exposed to the housing.

2. The power adapter according to claim 1, wherein in the thickness direction of the housing, a distance between an edge of the pin and an outer edge of the housing is less than a preset value;
in response to the first cover body being in the second position, a distance between an outer edge of the first cover body and an edge of the pin located on the same side as the outer edge of the first cover is greater than or equal to the preset value, and a distance between an outer edge of the second cover body and an edge of the pin located on the same side as the outer edge of the second cover is greater than or equal to the preset value.

3. The power adapter according to claim 1, wherein in response to the first cover body switching between the first position and the second position, a height direction of the first cover body is parallel to a length direction of the pin.

4. The power adapter according to claim 3, wherein the housing comprises a main body and a boss protruded from an end of the main body, and the pin is connected to the boss;
in the first position, the boss is relatively covered by the first cover body and the second cover body; and
in the second position, the first cover is stacked on a side of the main body in a thickness direction of the main body, and the second cover is stacked on an opposite side of the main body in the thickness direction of the main body.

5. The power adapter according to claim 4, wherein in the second position, the first cover body and the second cover body are attached to the main body.

6. The power adapter according to claim 4, wherein in the second position, an end surface of the first cover close to the pin, an end surface of the second cover close to the pin are flush with an end surface of the boss that exposes to the pin, so as to define a pin surface of the power adapter.

7. The power adapter according to claim 4, wherein in the first position, the first cover body and the second cover body are enclosed to define a receiving cavity to receive the pin and the boss, and a peripheral outer surface of the first cover body is flush with a peripheral outer surface of a side of the main body, and a peripheral outer surface of the second cover body is flush with a peripheral outer surface of an opposite side of the main body.

8. The power adapter according to any one of claims 1-7, wherein the synchronization mechanism comprises a slider, a first swing rod, a second swing rod, a first connecting rod and a second connecting rod, the slider is in a sliding fit with the housing, and an end of the first swing rod and an end of the second swing rod are rotationally connected to the slider, an opposite end of the first swing rod is rotationally connected to the first connecting rod, and an opposite end of the second swing rod is rotationally connected to the second connecting rod; and
an end of the first connecting rod and an end of the second connecting rod are rotationally connected to the housing, an opposite end of the first connecting rod is rotationally connected to the first cover body, and an opposite end of the second connecting rod is rotatably connected to the second cover body.

9. The power adapter according to claim 8, wherein an axis where the first swing rod rotates relative to the first connecting rod is located between an axis where the first connecting rod rotates relative to the housing and an axis where the first connecting rod rotates relative to the first cover body; an axis where the second swing rod rotates relative to the second connecting rod is located between an axis where the second connecting rod rotates relative to the housing and an axis where the second connecting rod rotates relative to the second cover body.

10. The power adapter according to claim 9, wherein the power adapter further comprises a first stabilizer rod and a second stabilizer rod, an end of the first stabilizer rod and an end of the second stabilizer rod are rotatably connected to the housing, an opposite end of the first stabilizer rod is rotatably connected to the first cover body, and an opposite end of the second stabilizer rod is rotatably connected to the second cover body.

11. The power adapter according to claim 10, wherein an axis where the first stabilizer rod rotates relative to the housing and an axis where the first connecting rod rotates relative to the housing are arranged at intervals along the length direction of the pin;
an axis where the first stabilizer rod rotates relative to the first cover body and an axis where the first connecting rod rotates relative to the first cover body are arranged at intervals along a height direction of the first cover body;
an axis where the second stabilizer rod rotates relative to the housing and an axis where the second connecting rod rotates relative to the housing are arranged at intervals along the length direction of the pin; and
an axis where the second stabilizer rod rotates relative to the second cover body and an axis where the second connecting rod rotates relative to the second cover body are arranges at intervals along a height direction of the second cover body.

12. The power adapter according to claim 11, wherein a connecting line between the axis where the first stabilizer rod rotates relative to the housing and the axis where the first connecting rod rotates relative to the housing is parallel to a connecting line between the axis where the first stabilizer rod rotates relative to the first cover body and the axis where the first connecting rod rotates relative to the first cover body,
a connecting line between the axis where the first stabilizer rod rotates relative to the housing and the axis where the first stabilizer rod rotates relative to the first cover body is parallel to a connecting line between the axis where the first connecting rod rotates relative to the housing and the axis where the first connecting rod rotates relative to the first cover body;
a connecting line between the axis where the second stabilizer rod rotates relative to the housing and the axis where the second connecting rod rotates relative to the housing is parallel to a connecting line between the axis where the second stabilizer rod rotates relative to the second cover body and the axis where the second connecting rod rotates relative to the second cover body; and
a connecting line between the axis where the second stabilizer rod rotates relative to the housing and the axis where the second stabilizer rod rotates relative to the second cover body is parallel to a connecting line between the axis where the second connecting rod rotates relative to the housing and the axis where the second connecting rod rotates relative to the second cover body.

13. The power adapter according to claim 12, wherein the axis where the first stabilizer rod rotates relative to the housing is closer to a free end of the pin than the axis where the first connecting rod rotates relative to the housing, and the axis where the second stabilizer rod rotates relative to the housing is closer to the free end of the pin than the axis where the second connecting rod rotates relative to the housing.

14. The power adapter according to claim 10, wherein the first connecting rod and the second connecting rod are symmetrically arranged on two opposite sides of the slider, and the first stabilizer rod and the second stabilizer rod are symmetrically arranged on two opposite sides of the slider.

15. The power adapter according to claim 10, wherein the number of pins is two, positions of the two pins are relatively fixed with positions of the housing, the housing is arranged with a sliding groove between the two pins, and the slider is limited to the sliding groove.

16. The power adapter according to claim 15, wherein at least part of the slide extends out of the sliding groove in the first position, and the slide is housed in the sliding groove in the second position.

17. The power adapter according to claim 15, wherein the number of first stabilizer rods is two, and the two pins are located between the two first stabilizer rods; and
the number of second stabilizer rods is two, and the two pins are located between the two second stabilizer rods.

18. The power adapter according to any one of claims 1-7, wherein one of the first cover body and the second cover body is arranged with a magnetic member, and the other of the first cover body and the second cover body is arranged with a magnetic fitting member;
in the first position, the magnetic member is attracted to the magnetic fitting member; and
in the second position, the magnetic member is opposite to the magnetic fitting member, and there is magnetic attraction between the magnetic member and the magnetic fitting member.

19. The power adapter according to claim 18, wherein the housing is arranged with a magnet, and in the second position the magnetic member and the magnetic fitting member are attracted to the magnet.

20. The power adapter according to claim 1 or 2, wherein the synchronization mechanism comprises a first gear and a second gear connected to the first gear in a transmission manner, the first gear is connected to the first cover body and is rotatably connected to the housing, and the second gear is connected to the second cover body and is rotatably connected to the housing.
